# EUROPÄISCHE PATENTANMELDUNG

(11) **EP 4 523 821 A1**
(43) Veröffentlichungstag der Anmeldung: **19.03.2025**
(21) Anmeldenummer: 24196744.7
(22) Anmeldetag: 27.08.2024
(51) Int. Cl.: B23B 31/02, B23B 31/117, B23Q 11/10

(54) **WERKZEUGAUFNAHME MIT ABGEDICHTETEM KÜHLMITTELROHR**

(30) Priorität: 14.09.2023 DE 102023124923
(71) Anmelder: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(57) **Zusammenfassung**

Die Erfindung betrifft eine Werkzeugaufnahme (2) zur, insbesondere kraftschlüssigen, Halterung eines Werkzeugs, insbesondere eines Rotationswerkzeugs, sowie einen Bausatz, insbesondere für eine solche Werkzeugaufnahme.

Die Werkzeugaufnahme sieht einen Aufnahmekörper (6) vor, welcher eine Drehachse (8), eine Schnittstelle (10) hinten zur Aufnahme der Werkzeugaufnahme in einer Arbeitsspindel einer Werkzeugmaschine, einen Aufnahmeabschnitt (14) vorne zur kraftschlüssigen Halterung des Werkzeugs, insbesondere des Rotationswerkzeugs, eine längs der Drehachse zwischen der Schnittstelle und dem Aufnahmeabschnitt angeordnete Kühlmittelbohrung, mittels welcher Kühlmittel längs der Drehachse von der Schnittstelle hin zum Aufnahmeabschnitt leitbar ist und welche in Richtung der Drehachse hin zum Aufnahmeabschnitt einen ersten Bereich (20) mit sich daran anschließenden zweiten Bereich (22) aufweist, wobei ein Durchmesser des ersten Bereiches erweitert gegenüber einem Durchmesser des zweiten Bereichs ist, sowie ein in dem Durchmesser erweiterten, ersten Bereich der Kühlmittelbohrung angeordnetes Kühlmittelrohr (28) aufweist.

In Richtung zum Aufnahmeabschnitt hin ist zwischen dem Kühlmittelrohr und dem Durchmesser kleineren, zweiten Bereich der Kühlmittelbohrung ein Hohlraum (30) in dem Aufnahmekörper bzw. in dem Durchmesser erweiterten, ersten Bereich ausgebildet.

Um den Kühlmittelfluss - und so eine Kühlung eines Werkzeugs zu verbessert, ist bei der Werkzeugaufnahme vorgesehen, dass in dem Hohlraum zwischen dem Kühlmittelrohr und einem schnittstellenseitigen Ende des Durchmesser kleineren, zweiten Bereichs ein von Kühlmittel durchströmbares, den Kühlmittelfluss gegenüber dem Hohlraum abdichtendes Überbrückungselement(32) angeordnet ist.

## Beschreibung

Die Erfindung betrifft eine **Werkzeugaufnahme** zur, insbesondere kraftschlüssigen, Halterung eines Werkzeugs, insbesondere Rotationswerkzeugs, sowie einen **Bausatz,** insbesondere für eine solche **Werkzeugaufnahme.**

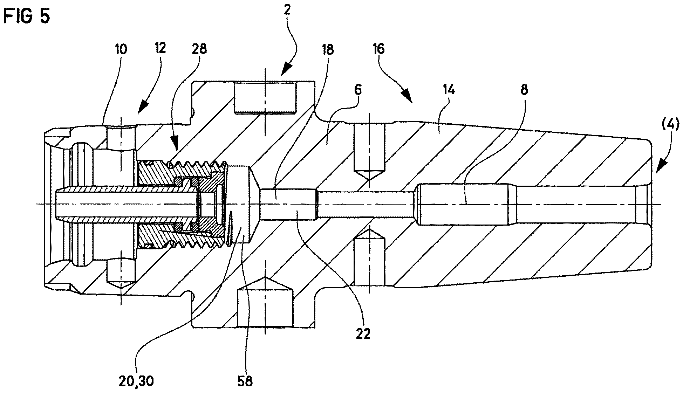

FIG 5 zeigt eine solche Werkzeugaufnahme aus dem Stand der Technik.

Die in FIG 5 dargestellte, bekannte Werkzeugaufnahme ist eine sogenannte PSC Werkzeugaufnahme (in Ausführung eines Schrumpffutters), welche - demgemäß - eine PSC Schnittstelle (Polygonschaftkegel, Capto, Spindelschnittstelle ISO 26623) hinten bzw. spindelschnittstellenseitig bei einem Aufnahmekörper der Aufnahme - zur Aufnahme der PSC Werkzeugaufnahme in einer Arbeitsspindel einer Werkzeugmaschine (oder beispielsweise einem Werkzeugrevolver bei nichtrotierender Bearbeitung) - vorsieht.

Weiter sieht, wie FIG 5 zeigt, der Aufnahmekörper der PSC Werkzeugaufnahme eine Drehachse, eine Aufnahmeöffnung vorne bzw. werkzeugseitig am Aufnahmekörper - zur kraftschlüssigen Halterung des Rotationswerkzeugs (das Rotationswerkzeug wird dann hier bei dem Schrumpffutter eingeschrumpft) - sowie eine längs der Drehachse zwischen der PSC Schnittstelle und der Aufnahmeöffnung angeordnete Kühlmittelbohrung vor. Mittels der Kühlmittelbohrung wird Kühlmittel längs der Drehachse von der PSC Schnittstelle hin zur Aufnahmeöffnung geleitet.

Wie weiter auch FIG 5 zeigt, sieht die PSC Werkzeugaufnahme - in Richtung der Drehachse hin zur Aufnahmeöffnung - einen ersten Bereich mit sich daran anschließenden zweiten Bereich vor. Ein Durchmesser des ersten Bereiches ist dabei erweitert gegenüber einem Durchmesser des zweiten Bereichs.

In dem Durchmesser erweiterten, ersten Bereich der Kühlmittelbohrung ist bei der PSC Werkzeugaufnahme ein Kühlmittelrohr verschraubt - derart, dass sich (, kann das Kühlmittelrohr nur bis zu einer vorgegebenen Tiefe in den Durchmesser erweiterten, ersten Bereich der Kühlmittelbohrung eingeschraubt werden,) - in Richtung zur Aufnahmeöffnung hin - zwischen dem Kühlmittelrohr und dem Durchmesser kleineren, zweiten Bereich der Kühlmittelbohrung ein Hohlraum in dem Aufnahmekörper bzw. in dem Durchmesser erweiterten, ersten Bereich ausbildet.

Nachteilig bei solchen PSC Werkzeugaufnahme bzw. solchen diesen Hohlraum ausbildenden Werkzeugaufnahmen ist, dass, wird Kühlmittel durch die Werkzeugaufnahme geleitet, es zu Verwirbelungen und Versackungen des Kühlmittels in dem Hohlraum ("Stauraum") kommt, was weiter zu einer verminderten Werkzeugkühlung führen kann.

Es ist Aufgabe der Erfindung, die, wie beschrieben, im Stand der Technik bekannten Werkzeugaufnahmen dahingehend zu verbessern, dass sie eine verbesserte Kühlung von Werkzeugen ermöglichen.

Diese Aufgabe wird gelöst durch eine **Werkzeugaufnahme** und einen **Bausatz** mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich auf die **Werkzeugaufnahme** wie auch auf den **Bausatz.**

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Drehachsen (bzw. Mittel- bzw. Symmetrieachsen) hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die **Werkzeugaufnahme** zur, insbesondere kraftschlüssigen, Halterung eines Werkzeugs, insbesondere eines Rotationswerkzeugs, wie beispielsweise eines Schaftfräsers, sieht einen Aufnahmekörper vor.

Dieser Aufnahmekörper weist eine Drehachse, eine Schnittstelle hinten zur Aufnahme der Werkzeugaufnahme in einer Arbeitsspindel einer Werkzeugmaschine und einen Aufnahmeabschnitt vorne zur, insbesondere kraftschlüssigen, Halterung des Werkzeugs, insbesondere des Rotationswerkzeugs, sowie eine längs der Drehachse zwischen der Schnittstelle und dem Aufnahmeabschnitt angeordnete Kühlmittelbohrung auf.

Mittels dieser Kühlmittelbohrung kann bzw. wird Kühlmittel längs der Drehachse von der Schnittstelle hin zum Aufnahmeabschnitt geleitet. Bei dem Kühlmittel kann es sich um gasförmige und/oder flüssige Fluide handeln wie Luft, CO₂, N₂ oder um Gas-Flüssigkeits-Gemische (Ölnebel) wie sie für Minimalmengenschmierung verwendet werden, handeln.

Diese Kühlmittelbohrung sieht weiter auch - in Richtung der Drehachse hin zum Aufnahmeabschnitt - einen ersten Bereich mit sich daran anschließenden zweiten Bereich vor, wobei ein Durchmesser des ersten Bereiches erweitert gegenüber einem Durchmesser des zweiten Bereichs ist. Kurz und anschaulich gesagt, der erste Bereich ist durchmessergrößer als der zweite Bereich.

Auch weist der Aufnahmekörper ein - in dem Durchmesser erweiterten, ersten Bereich der Kühlmittelbohrung angeordnetes - Kühlmittelrohr auf, durch welches Kühlmittel in einem Inneren bzw. durch das Innere des Aufnahmekörpers, genauer in bzw. durch den durchmessergrößeren zweiten Bereich geleitet wird.

In Richtung zum Aufnahmeabschnitt hin ist - zwischen dem Kühlmittelrohr und dem Durchmesser kleineren, zweiten Bereich der Kühlmittelbohrung - ein Hohlraum in dem Aufnahmekörper bzw. in dem Durchmesser erweiterten, ersten Bereich ausgebildet.

Dieser Hohlraum bildet sich insbesondere deshalb bzw. dann aus, wenn das Kühlmittelrohr nur beschränkt tief in den Durchmesser erweiterten, ersten Bereich eingesetzt, insbesondere eingeschraubt, werden kann. Anders ausgedrückt, das Kühlmittelrohr kann hier nicht bis an das schnittstellenseitige Ende des Durchmesser kleineren, zweiten Bereichs heran in den Durchmesser erweiterten, ersten Bereich eingesetzt, insbesondere eingeschraubt, werden.

Gekennzeichnet ist die **Werkzeugaufnahme** dadurch, dass in dem Hohlraum zwischen dem Kühlmittelrohr und einem schnittstellenseitigen Ende des durchmesserkleineren, zweiten Bereichs ein von Kühlmittel durchströmbares, den Kühlmittelfluss gegenüber dem Hohlraum abdichtendes Überbrückungselement angeordnet ist.

Vereinfacht und anschaulich ausgedrückt, die **Werkzeugaufnahme** sieht vor, den Hohlraum mit einem Zwischenstück - zwischen dem Kühlmittelrohr und dem zweiten Bereich -, d.h., mit dem (gegenüber dem Hohlraum abgedichteten) Überbrückungselement, zu überbrücken.

Hierdurch kann, was sich als besonders vorteilhaft erweist, vermieden werden, dass Kühlmittel vom Kühlmittelrohr in den Hohlraum einströmen kann.

Der Erfindung liegt die Überlegung zugrunde, dass es bislang bei einem - vom Kühlmittelrohr in den Hohlraum einströmenden und diesen durchströmenden Kühlmittel dort im Hohlraum zu Verwirbelungen und Versackungen kommt.

Nicht zuletzt deshalb, ist - zwangsweise - der Innendurchmesser des in dem Durchmesser erweiterten ersten Bereich angeordneten Kühlmittelrohres kleiner als der Durchmesser des Hohlraums selbst (, d.h., des durchmessererweiterten ersten Bereichs).

Strömt so das Kühlmittel von einem durchmesserkleineren Bereich (nahezu übergangslos) in einen Bereich größeren Durchmessers, so (anschaulich und vereinfacht ausgerückt) "weicht" die Kühlmittelströmung bzw. das Kühlmittel in die seitlichen, erweiterten Bereiche des Hohlraums aus - und es kann zu (dortigen) Versackungen und Verwirbelungen kommen.

Insbesondere auch im Falle einer sogenannten Minimalmengenschmierung - mittels eines Ölnebels bzw. Luft-Öl-Gemisches - wird das Öl des Gemisches - gewichts- und rotationsbedingt - in die seitlichen Bereiche des Hohlraums gedrückt (, wo es sich ansammeln kann). Die Kühlmittelströmung wird gestört; die Zusammensetzung des weiterströmenden Kühlmittelgemisches wird verändert.

Sieht die **Werkzeugaufnahme** nun aber vor, dass in dem Hohlraum zwischen dem Kühlmittelrohr und einem schnittstellenseitigen Ende des durchmesserkleineren, zweiten Bereichs ein von Kühlmittel durchströmbares, den Kühlmittelfluss gegenüber dem Hohlraum abdichtendes Überbrückungselement angeordnet ist, so erreicht die **Werkzeugaufnahme,** dass der Kühlmittelfluss verstetigt wird bzw. stetig bleibt, durchströmt das Kühlmittel nicht mehr den Hohlraum selbst, sondern das dortig angeordnete Überbrückungselement (- und kann so der Kühlmittelfluss eben nicht mehr in die erweiterten Bereiche des Durchmesser erweiterten, ersten Bereichs bzw. des Hohlraums "ausweichen",). Das Kühlmittel kann so wirbelfrei und ohne Versackungen zu dem Aufnahmeabschnitt - und so zum Werkzeug strömen.

Bevorzugt - und insbesondere auch im Fall einer kraftschlüssigen Halterung, kann vorgesehen sein, dass der Aufnahmeabschnitt eine Aufnahmeöffnung ist, in welcher das Werkzeug, insbesondere bzw. beispielsweise ein Schaftfräser, - insbesondere kraftschlüssig - eingeschoben/gehalten werden kann. Die Werkzeugaufnahme könnte in so einem Fall ein Spannfutter, beispielsweise ein Schrumpffutter, ein Hydrodehnspannfutter oder ein Spannzangenfutter, sein.

Alternativ könnte der Aufnahmeabschnitt auch ein (Aufnahme-)Zapfen o.Ä. sein, auf welchem das Werkzeug gehalten wird.

Das Werkzeug könnte ein Rotationswerkzeug oder ein Drehwerkzeug sein.

Auch kann vorgesehen sein, dass - um unterschiedliche axiale Längen des zu überbrückenden Hohlraums - von Kühlmittelrohr und Durchmesser kleineren, zweiten Bereichs - auszugleichen, das Überbrückungselement jeweils eine daran angepasste individuelle Länge aufweist.

Bevorzugt kann vorgesehen sein, dass eine Innenbohrung des Überbrückungselements einen im wesentlichen gleichen Durchmesser wie ein Durchmesser einer Innenbohrung des Kühlmittelrohres und/oder wie ein Durchmesser des durchmesserkleineren, zweiten Bereichs der Kühlmittelbohrung aufweist.

Auch kann vorgesehen sein, dass eine Innenbohrung des Überbrückungselements einen sich längs der Drehachse von der Schnittstelle hin zum Aufnahmeabschnitt, insbesondere kontinuierlich, ändernden Durchmesser aufweist, wobei insbesondere der Durchmesser der Innenbohrung des Überbrückungselements am seinem aufnahmeabschnittseitigen Ende im Wesentlichen gleich wie ein Durchmesser des durchmesserkleineren, zweiten Bereichs der Kühlmittelbohrung ist.

Sind nämlich die Innenbohrung des Kühlmittelrohres und der Durchmesser des durchmesserkleineren, zweiten Bereiches unterschiedlich, so kann dadurch die Innenbohrung des Überbrückungselementes diesen Durchmesserunterschied - insbesondere stetig - angleichen.

Auch kann bevorzugt vorgesehen sein, dass das Überbrückungselement im Wesentlichen hohlzylindrisch ausgebildet ist - mit einem vorderseitigen bzw. aufnahmeabschnittseitigen Abdichtflansch, welcher abdichtend an dem hinterseitigen bzw. schnittstellenseitigen Ende des durchmesserkleineren, zweiten Bereichs anliegt.

Ferner kann es zweckmäßig sein, wenn das Kühlmittelrohr verschraubt in dem Durchmesser erweiterten, ersten Bereich der Kühlmittelbohrung angeordnet ist, insbesondere bis zu einer vorgebbaren maximalen Einschraubtiefe in dem durchmessererweiterten, ersten Bereich der Kühlmittelbohrung verschraubt angeordnet ist.

Die - begrenzte - Einschraubtiefe kann sich beispielsweise durch einen Anschlag, eine Schulter o.Ä.- oder auch alleine durch eine Gewindelänge oder bei dem Gebrauch einer Einschraubhilfe - ergeben.

Nach einer bevorzugten Ausgestaltung kann auch vorgesehen sein, dass das Kühlmittelrohr mehrteilig mit zumindest einem Zuführungsrohr, einer Gewindebuchse, insbesondere mit einem Außengewinde, und einem Flanschelement ausgeführt ist.

Dabei kann es auch zweckmäßig sein, wenn das Überbrückungselement mit dem Flanschelement des Kühlmittelrohres verschraubt oder verpresst gehalten ist.

Auch zweckmäßig erscheint es, wenn das Kühlmittelrohr mittels seiner Gewindebuchse im Inneren des Aufnahmekörpers bzw. im durchmessererweiterten, ersten Bereich der Kühlmittelbohrung verschraubt ist.

Bevorzugt ist es dabei auch, wenn das Flanschelement in einer Innenbohrung der Gewindebuchse verschraubt oder verpresst gehalten ist.

Bei einer bevorzugten Ausgestaltung ist dann vorgesehen, dass das Überbrückungselement aus Kunststoff oder Gummi bzw. ein Elastomer - oder anderweitig elastisch ist. Auch kann so das Überbrückungselement gefedert, beispielsweise ein gefedertes Rohr, sein.

Ferner kann es sich bei dem Kühlmittel um gasförmige und/oder flüssige Fluide handeln wie Luft, CO2, N2 oder um Gas-Flüssigkeits-Gemische (Ölnebel).

Zweckmäßig erscheint es auch, wenn Dichtelemente an dem Kühlmittelrohr und/oder an dem Zuführungsrohr angeordnet sind, welche es gegenüber dem Durchmesser erweiterten, ersten Bereich bzw. der Gewindebuchse und/oder dem Flanschelement abdichten.

Bevorzugt erscheint es, wenn die Schnittstelle eine PSC Schnittstelle bzw. eine Spindelschnittstelle ISO 26623 oder eine KM4X Schnittstelle ist.

Weiterhin erscheint es auch zweckmäßig, wenn die Erfindung einen Bausatz, insbesondere für die Werkzeugaufnahme, zur Verfügung stellt.

Der Bausatz soll das bzw. ein Kühlmittelrohr, insbesondere für die Werkzeugaufnahme, sowie mehrere Überbrückungselemente, insbesondere für die **Werkzeugaufnahme,** mit jeweils unterschiedlichen Durchmessern von den bzw. von Innenbohrungen der jeweiligen Überbrückungselemente und/oder mit verschiedenen Längen, aufweisen.

Auch kann weiter hier vorgesehen sein, dass die Innenbohrungen der Überbrückungselemente einen sich längs der Drehachse von der Schnittstelle hin zum Aufnahmeabschnitt, insbesondere kontinuierlich, ändernden Durchmesser aufweist, wobei insbesondere der Durchmesser der Innenbohrung des jeweiligen Überbrückungselements an seinem aufnahmeabschnittseitigen Ende im Wesentlichen gleich wie ein Durchmesser des durchmesserkleineren, zweiten Bereichs der Kühlmittelbohrung ist.

Die mehreren Überbrückungselemente wären so dann auswechselbar - und könnten, sehen sie unterschiedliche, insbesondere sich auch ändernde, Innenbohrungsdurchmesser vor, unterschiedliche Durchmesserunterschiede - von Kühlmittelrohr und Durchmesser kleineren, zweiten Bereichs - ausgleichen.

Die mehreren Überbrückungselemente wären so dann auch auswechselbar - und könnten, sehen sie verschiedene Längen vor, unterschiedliche axiale Längen des zu überbrückenden Hohlraums - von Kühlmittelrohr und Durchmesser kleineren, zweiten Bereichs - ausgleichen.

Abschließend kann zur Erfindung festgestellt werden, dass sie sich mit allen ihren Aspekten insbesondere durch Einfachheit, Effizienz und Effektivität auszeichnet - und maßgeblich zu einem verbesserten Kühlmittelfluss und Werkzeugkühlung beiträgt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

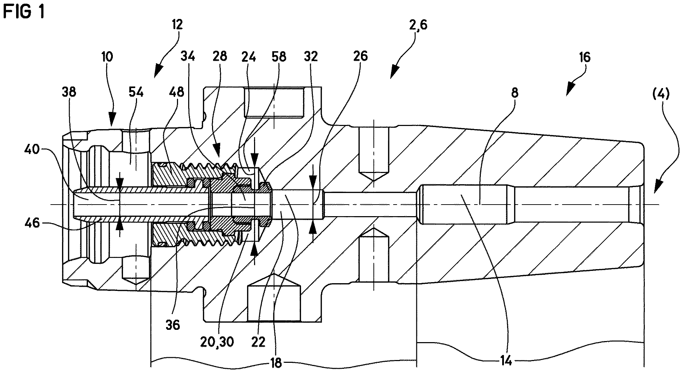

- FIG 1: ein PSC Schrumpffutter mit innerer Kühlschmierstoffdurchführung durch das Werkzeug gemäß einer Ausführung der Erfindung,

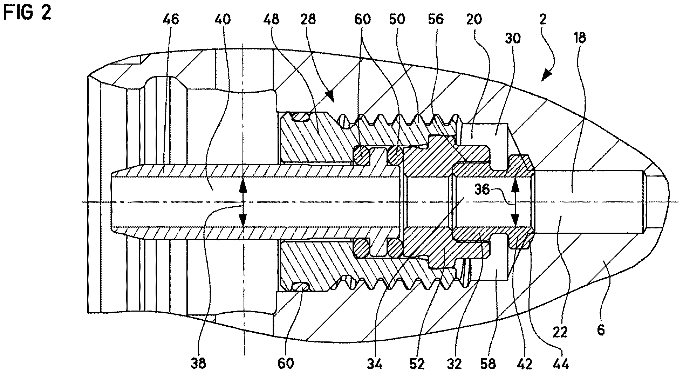

- FIG 2: das PSC Schrumpffutter nach FIG 2 in einer weiteren Ansicht,

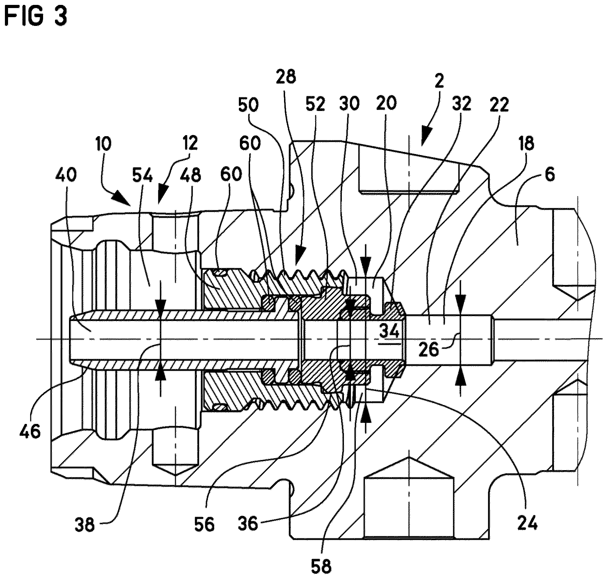

- FIG 3: das PSC Schrumpffutter nach FIG 2 in einer weiteren Ansicht,

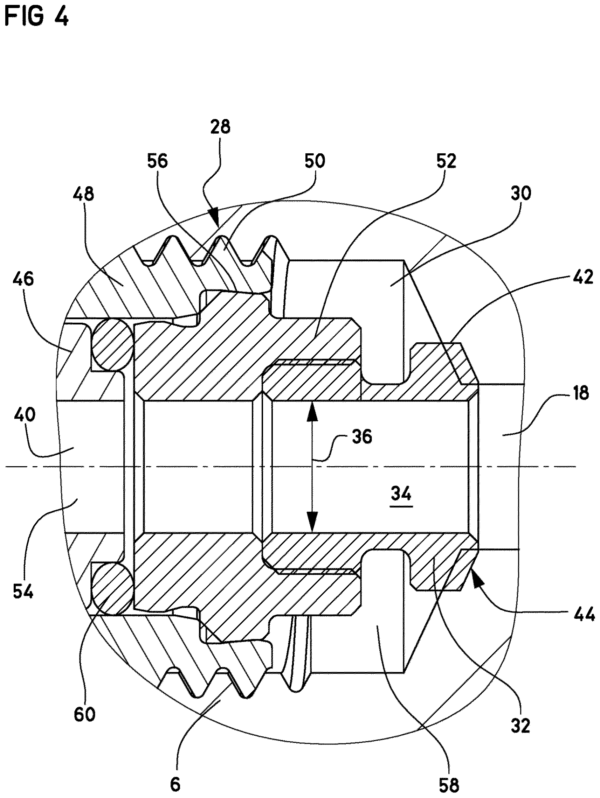

- FIG 4: das PSC Schrumpffutter nach FIG 2 in einer weiteren Ansicht
- FIG 5: eine PSC bzw. Capto Werkzeugaufnahme bzw. Schrumpffutter aus dem Stand der Technik.

- **PSC Schrumpffutter 2 mit verbesserter innerer Kühlschmierstoffdurchführung durch das Werkzeug (FIGen 1 bis 4)**

FIGen 1 bis 4 zeigen - in verschiedenen Ansichten und Details - eine Werkzeugaufnahme 2, in diesem Fall eine PSC Werkzeugaufnahme 2 in Ausgestaltung eines Schrumpffutters 2, d.h. ein Schrumpffutter 2, welche eine PSC Schnittstelle 10 vorsieht, - mit verbesserter innerer Kühlschmierstoffdurchführung durch die Werkzeugaufnahme.

D.h., die in FIGen 1 bis 4 dargestellte Werkzeugaufnahme 2 (die Werkzeugaufnahme kurz im Folgenden auch nur "Aufnahme" 2) ist ein sogenanntes PSC Schrumpffutter 2, welches - demgemäß - eine PSC Schnittstelle 2 (vgl. Spindelschnittstelle ISO 26623) hinten 12 bei einem Aufnahmekörper 6 des PSC Schrumpffutters 2 zur Aufnahme des PSC Schrumpffutters 2 in einer Arbeitsspindel (oder - bei stehender Bearbeitung - beispielsweise einem Werkzeugrevolver (nicht gezeigt) einer Werkzeugmaschine (nicht gezeigt) vorsieht.

Die in den FIGen 1 bis 4 dargestellte Aufnahme 2 zeichnet sich durch verbesserte innere Kühlschmierstoffdurchführung durch das Werkzeug/Aufnahme 2 aus, auf welche im Späteren näher eingegangen werden soll.

Weiter sieht, wie die FIGen 1 bis 4 zeigen, der Aufnahmekörper 6 der Aufnahme eine Drehachse 8 sowie eine Aufnahmeöffnung 14 vorne 16 am Aufnahmekörper 6 vor - zur kraftschlüssigen Halterung des Rotationswerkzeugs 4 (das Rotationswerkzeug 4, beispielsweise ein Schaftfräser, wird dann hier bei dem Schrumpffutter 2 eingeschrumpft) (nicht gezeigt).

Für die angesprochene innere Kühlschmierstoffdurchführung realisiert die Aufnahme 2 eine längs der Drehachse 8 zwischen der PSC Schnittstelle 10 und der Aufnahmeöffnung 14 angeordnete Kühlmittelbohrung 18. Mittels der Kühlmittelbohrung 18 wird Kühlmittel bzw. der Kühlschmierstoff längs der Drehachse 8 von der PSC Schnittstelle 10 hin zur Aufnahmeöffnung 14 geleitet.

Die Kühlmittelbohrung 18 in bzw. im Inneren 54 der Aufnahme 2 bzw. des Aufnahmekörpers 6 zeigt verschiedene Bereiche - in Richtung der Drehachse 8 hin zur Aufnahmeöffnung 14 -, nämlich einen ersten Bereich 20 mit sich daran anschließenden zweiten Bereich 22. Wie die FIGen 1 bis 4 zeigen, ist ein Durchmesser 24 des ersten Bereiches 20 erweitert gegenüber einem Durchmesser 26 des zweiten Bereichs 22.

In dem Durchmesser 24 erweiterten, ersten Bereich 20 der Kühlmittelbohrung 18 ist ein - in diesem Fall - mehrteiliges Kühlmittelrohr 28 - aus einem Zuführungsrohr 46, einer - ein Außengewinde 50 aufweisenden - Gewindebuchse 48 und einem Flanschelement 52 angeordnet.

Wie die FIGen 1 bis 4 hier zeigen, ist das Kühlmittelrohr 28 mittels seiner das Außengewinde 50 aufweisenden Gewindebuchse 48 - hierüber - im Inneren 54 des Aufnahmekörpers 6/Aufnahme 2 bzw. im Durchmesser 24 erweiterten, ersten Bereich 20 der Kühlmittelbohrung 18 verschraubt.

Das Flanschelement 52 wird - aufnahmeöffnungsseitig - in einer Innenbohrung 56 der Gewindebuchse 48 verpresst gehalten. Das Zuführungsrohr ist - schnittstellenseitig der Gewindebuchs 48 - in der Innenbohrung 56 der Gewindebuchse abgedichtet gehalten. Diese Halterung ermöglicht es auch, kleine Winkelfehler/-abweichung bei dem Zuführungsrohr 46 auszugleichen.

Ist bzw. kann, wie auch den FIGen 1 bis 4 entnehmbar ist, das Kühlmittelrohr 28 nur bis zu einer vorgegebenen Tiefe in den Durchmesser 24 erweiterten, ersten Bereich 20 der Kühlmittelbohrung 18 eingeschraubt werden, so bildet sich hierdurch - in Richtung zur Aufnahmeöffnung 14 hin - zwischen dem Kühlmittelrohr 28 und dem Durchmesser 26 kleineren, zweiten Bereich 26 der Kühlmittelbohrung 18 ein Hohlraum 30 in dem Aufnahmekörper 6 bzw. in dem Durchmesser 24 erweiterten, ersten Bereich 20 aus.

Für die angesprochene - verbesserte - innere Kühlschmierstoffdurchführung realisiert die Aufnahme 2 in dem Hohlraum 30 zwischen dem Kühlmittelrohr 28 und dem schnittstellenseitigen Ende 44 des Durchmesser 26 kleineren, zweiten Bereichs 22 ein von Kühlmittel bzw. dem Kühlschmierstoff durchströmbares, den Kühlmittelfluss gegenüber dem Hohlraum 30 abdichtendes Überbrückungselement 32.

Dieses Überbrückungselement 32, welches im Wesentlichen hohlzylindrisch ausgebildet und ein Elastomer ist sowie einen vorderseitigen/aufnahmeöffnungsseitigen Abdichtflansch 42 vorsieht - liegt, wie die FIGen 1 bis 4 verdeutlichen, - durch den elastisch verformbaren Abdichtflansch 42 abdichtend - an dem schnittstellenseitigen Ende 44 des Durchmesser 26 kleineren, zweiten Bereichs 22 an.

Schnittstellenseitig - wird das Überbrückungselement 32 in dem Flanschelement 52 des Kühlmittelrohres 28 verpresst gehalten.

Die Innenbohrung 34 des Überbrückungselements 32 sieht, wie den FIGen 2 bis 4 entnehmbar ist, einen im wesentlichen gleichen Durchmesser 36 wie der Durchmesser 38 der Innenbohrung 40 des Kühlmittelrohres 28 bzw. dessen Zuführungsrohr 46 sowie wie der Durchmesser 26 des Durchmesser 26 kleineren, zweiten Bereichs 22 der Kühlmittelbohrung 18 vor.

D.h., die Zuführung des Kühlmittels bzw. Kühlschmierstoffs im Inneren 54 der Aufnahme 2/Aufnahmekörpers 6 bzw. in der Kühlmittelbohrung 18 im Inneren 54 der Aufnahme 2/Aufnahmekörpers 6 - längs der Drehachse 8 durch die Aufnahme 2 (schnittstellenseitig bis aufnahmeöffnungsseitig hin) - erfolgt bei annähernd konstant gleichem (Strömungs-)Querschnitt.

Die Abdichtung der Kühlmittelführung bzw. des Kühlmittelrohres 28 und des Überbrückungselements 32 gegenüber dem Hohlraum 30 erfolgt weiter auch durch weitere Dichtmittel 60, wie Dichtelemente 60, hier insbesondere Dichtringe 60, bei dem Kühlmittelrohr 28, d.h., an der Gewindebuchse 48, an dem Flanschelement 52 und an dem Zuführungsrohr 46 des Kühlmittelrohrs 28.

Die angesprochene - verbesserte - innere Kühlschmierstoffdurchführung vereinfacht und anschaulich beschrieben/ausgedrückt: die Aufnahme 2 sieht vor, den Hohlraum 30 zwischen dem Kühlmittelrohr 28 und dem Durchmesser 26 kleineren, zweiten Bereich 22 mit einem Zwischenstück 32 - zwischen dem Kühlmittelrohr 28 und dem Durchmesser 26 kleineren, zweiten Bereich 22 -, d.h., mit dem (gegenüber dem Hohlraum 30 abgedichteten) Überbrückungselement 32, - kühlmitteldicht und bei konstant gehaltenem Strömungsquerschnitt - zu überbrücken.

Hierdurch kann vermieden werden, dass Kühlmittel bzw. der Kühlschmierstoff vom Kühlmittelrohr 28 in den Hohlraum 30 bzw. dort in die erweiterten Bereiche 58 des Hohlraums 30 bzw. des Durchmesser 24 erweiterten, ersten Bereich 20 einströmen kann, sowie erreicht werden, dass der Kühlmittelfluss verstetigt wird bzw. stetig bleibt, durchströmt das Kühlmittel - wegen des nun eingesetzten Überbrückungselements 32 - annähernd querschnittskonstant die Kühlmittelzuführung. Das Kühlmittel kann so wirbelfrei und ohne Versackungen zu dem Aufnahmeabschnitt - und so zum Werkzeug hingeleitet werden bzw. strömen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Werkzeugaufnahme, Schrumpffutter
- 4: Werkzeug, Rotationswerkzeug, Drehwerkzeug
- 6: Aufnahmekörper
- 8: Drehachse
- 10: Schnittstelle

- 12: hinten
- 14: Aufnahmeabschnitt, Aufnahmeöffnung
- 16: vorne
- 18: Kühlmittelbohrung
- 20: erster Bereich

- 22: zweiter Bereich
- 24: Durchmesser des ersten Bereiches (20)
- 26: Durchmesser des zweiten Bereichs (22)
- 28: (mehrteiliges) Kühlmittelrohr
- 30: Hohlraum

- 32: (abdichtendes) Überbrückungselement
- 34: Innenbohrung des Überbrückungselements (32)
- 36: Durchmesser der Innenbohrung (34)
- 38: Durchmesser der Innenbohrung (40)
- 40: Innenbohrung des Kühlmittelrohres (28) bzw. des Zuführungsrohres (46)

- 42: Abdichtflansch des (abdichtenden) Überbrückungselements (32)
- 44: schnittstellenseitiges Ende des Durchmesser (26) kleineren, zweiten Bereichs (22)
- 46: Zuführungsrohr des (mehrteiligen) Kühlmittelrohr (28)
- 48: Gewindebuchse des (mehrteiligen) Kühlmittelrohr (28)
- 50: Außengewinde der Gewindebuchse (48)

- 52: Flanschelement des (mehrteiligen) Kühlmittelrohr (28)
- 54: Inneres des Aufnahmekörpers (6) bzw. der Werkzeugaufnahme (2)
- 56: Innenbohrung der Gewindebuchse (48)
- 58: erweiterte Bereiche des Durchmesser (24) erweiterten, ersten Bereich (20) bzw. des Hohlraums (30)
- 60: Dichtelement/-ring

## Patentansprüche

1. **Werkzeugaufnahme** (2) zur, insbesondere kraftschlüssigen, Halterung eines Werkzeugs (4), insbesondere eines Rotationswerkzeugs (4), mit einem Aufnahmekörper (6), welcher eine Drehachse (8), eine Schnittstelle (10) hinten (12) zur Aufnahme der Werkzeugaufnahme (2) in einer Arbeitsspindel einer Werkzeugmaschine, einen Aufnahmeabschnitt (14) vorne (16) zur, insbesondere kraftschlüssigen, Halterung des Werkzeugs (4), insbesondere des Rotationswerkzeugs (4), eine längs der Drehachse (8) zwischen der Schnittstelle (10) und dem Aufnahmeabschnitt (14) angeordnete Kühlmittelbohrung (18), mittels welcher Kühlmittel längs der Drehachse (8) von der Schnittstelle (10) hin zum Aufnahmeabschnitt (14) leitbar ist und welche in Richtung der Drehachse (8) hin zum Aufnahmeabschnitt (14) einen ersten Bereich (20) mit sich daran anschließenden zweiten Bereich (22) aufweist, wobei ein Durchmesser (24) des ersten Bereiches (20) erweitert gegenüber einem Durchmesser (26) des zweiten Bereichs (22) ist, sowie ein in dem Durchmesser (24) erweiterten, ersten Bereich (20) der Kühlmittelbohrung (18) angeordnetes Kühlmittelrohr (28) aufweist, wobei in Richtung zum Aufnahmeabschnitt (14) hin zwischen dem Kühlmittelrohr (28) und dem Durchmesser (26) kleineren, zweiten Bereich (22) der Kühlmittelbohrung (18) ein Hohlraum (30) in dem Aufnahmekörper (6) bzw. in dem Durchmesser (24) erweiterten, ersten Bereich (20) ausgebildet ist,
**dadurch gekennzeichnet, dass**
in dem Hohlraum (30) zwischen dem Kühlmittelrohr (28) und einem schnittstellenseitigen Ende (44) des Durchmesser (26) kleineren, zweiten Bereichs (22) ein von Kühlmittel durchströmbares, den Kühlmittelfluss gegenüber dem Hohlraum (30) abdichtendes Überbrückungselement (32) angeordnet ist.

2. **Werkzeugaufnahme** (2) nach einem der voranstehenden Ansprüche
**dadurch gekennzeichnet, dass**
eine Innenbohrung (34) des Überbrückungselements (32) einen im wesentlichen gleichen Durchmesser (36) wie ein Durchmesser (38) einer Innenbohrung (40) des Kühlmittelrohres (28) und/oder wie ein Durchmesser (26) des Durchmesser (26) kleineren, zweiten Bereichs (22) der Kühlmittelbohrung (18) aufweist.

3. **Werkzeugaufnahme** (2) nach einem der voranstehenden Ansprüche
**dadurch gekennzeichnet, dass**
eine Innenbohrung (34) des Überbrückungselements (32) einen sich längs der Drehachse (8) von der Schnittstelle (10) hin zum Aufnahmeabschnitt (14), insbesondere kontinuierlich, ändernden Durchmesser (36) aufweist, wobei insbesondere der Durchmesser (36) der Innenbohrung (34) des Überbrückungselements (32) an seinem aufnahmeabschnittseitigen Ende im Wesentlichen gleich wie ein Durchmesser (26) des Durchmesser (26) kleineren, zweiten Bereichs (22) der Kühlmittelbohrung (18) ist.

4. **Werkzeugaufnahme** (2) nach einem der voranstehenden Ansprüche
**dadurch gekennzeichnet, dass**
das Überbrückungselement (32) im Wesentlichen hohlzylindrisch ausgebildet ist mit einem vorderseitigen Abdichtflansch (42), welcher abdichtend an dem schnittstellenseitigen Ende (44) des Durchmesser (26) kleineren, zweiten Bereichs (22) anliegt.

5. **Werkzeugaufnahme** (2) nach einem der voranstehenden Ansprüche
**dadurch gekennzeichnet, dass**
das Kühlmittelrohr (28) verschraubt in dem Durchmesser (24) erweiterten, ersten Bereich (20) der Kühlmittelbohrung (18) angeordnet ist, insbesondere, dass das Kühlmittelrohr (28) bis zu einer vorgebbaren maximalen Einschraubtiefe in dem Durchmesser (24) erweiterten, ersten Bereich (20) der Kühlmittelbohrung (18) verschraubt angeordnet ist.

6. **Werkzeugaufnahme** (2) nach einem der voranstehenden Ansprüche
**dadurch gekennzeichnet, dass**
das Kühlmittelrohr (28) mehrteilig mit zumindest einem Zuführungsrohr (46), einer Gewindebuchse (48), insbesondere mit einem Außengewinde (50), und einem Flanschelement (52) ausgeführt ist.

7. **Werkzeugaufnahme** (2) nach einem der voranstehenden Ansprüche
**dadurch gekennzeichnet, dass**
das Überbrückungselement (32) mit dem Flanschelement (52) des Kühlmittelrohres (28) verschraubt oder verpresst gehalten ist.

8. **Werkzeugaufnahme** (2) nach einem der voranstehenden Ansprüche
**dadurch gekennzeichnet, dass**
das Kühlmittelrohr (28) mittels seiner Gewindebuchse (48) im Inneren (54) des Aufnahmekörpers (6) bzw. im Durchmesser (24) erweiterten, ersten Bereich (20) der Kühlmittelbohrung (18) verschraubt ist.

9. **Werkzeugaufnahme** (2) nach einem der voranstehenden Ansprüche
**dadurch gekennzeichnet, dass**
das Flanschelement (52) in einer Innenbohrung (56) der Gewindebuchse (48) verschraubt oder verpresst gehalten ist.

10. **Werkzeugaufnahme** (2) nach einem der voranstehenden Ansprüche
**dadurch gekennzeichnet, dass**
das Überbrückungselement (32) aus Kunststoff oder Gummi bzw. ein Elastomer oder anderweitig elastisch oder ein gefedertes Rohr ist.

11. **Werkzeugaufnahme** (2) nach einem der voranstehenden Ansprüche
**dadurch gekennzeichnet, dass**
der Aufnahmeabschnitt (14) eine Aufnahmeöffnung (14) zur, insbesondere kraftschlüssigen, Halterung eines Werkzeugs (4), insbesondere eines Rotationswerkzeugs (4), ist und/oder dass das Werkzeug (4) ein Rotationswerkzeug (4) oder ein Drehwerkzeug (4) ist und/oder dass das Rotationswerkzeug (4) ein Schaftfräser (4) ist.

12. **Werkzeugaufnahme** (2) nach einem der voranstehenden Ansprüche
**dadurch gekennzeichnet, dass**
Dichtelemente (60) an dem Kühlmittelrohr (28) und/oder an dem Zuführungsrohr (46) angeordnet sind, welche es gegenüber dem Durchmesser (24) erweiterten, ersten Bereich (20) bzw. der Gewindebuchse (48) und/oder dem Flanschelement (52) abdichten.

13. **Werkzeugaufnahme** (2) nach einem der voranstehenden Ansprüche
**dadurch gekennzeichnet, dass**
die Schnittstelle (10) eine PSC Schnittstelle bzw. eine Spindelschnittstelle ISO 26623 oder eine KM4X Schnittstelle ist.

14. **Bausatz,** insbesondere für eine **Werkzeugaufnahme** (2) nach einem der voranstehenden Ansprüche,
**gekennzeichnet, durch**
ein Kühlmittelrohr (28) für eine **Werkzeugaufnahme** (2), insbesondere nach einem der voranstehenden Ansprüche, sowie mehrere Überbrückungselemente (32) für eine **Werkzeugaufnahme** (2), insbesondere nach einem der voranstehenden Ansprüche, mit jeweils unterschiedlichen Durchmessern (36) von Innenbohrungen (34) der jeweiligen Überbrückungselemente (32) und/oder mit verschiedenen Längen.
